# EUROPÄISCHE PATENTSCHRIFT

(11) **EP 3 635 873 B1**
(45) Veröffentlichungstag und Bekanntmachung des Hinweises auf die Patenterteilung: **07.04.2021**
(21) Anmeldenummer: 18789129.6
(22) Anmeldetag: 17.10.2018
(51) Int. Cl.: H04B 1/00, H04B 1/44, H04B 1/3822

(54) **VERFAHREN UND VORRICHTUNGEN ZUR VERSTÄRKUNG VON FUNKSIGNALEN ZWISCHEN EINEM ENDGERÄT UND EINER ANTENNE IN EINEM ERSTEN FREQUENZBAND UND IN EINEM ZWEITEN FREQUENZBAND**
METHOD AND DEVICES FOR AMPLIFYING RADIO SIGNALS BETWEEN A TERMINAL DEVICE AND AN ANTENNA IN A FIRST FREQUENCY BAND AND IN A SECOND FREQUENCY BAND
PROCÉDÉ ET DISPOSITIFS D'AMPLIFICATION DE SIGNAUX RADIOÉLECTRIQUES ENTRE UN APPAREIL TERMINAL ET UNE ANTENNE DANS UNE PREMIÈRE BANDE DE FRÉQUENCES ET DANS UNE SECONDE BANDE DE FRÉQUENCES

(30) Priorität: 06.11.2017 DE 102017219685
(43) Veröffentlichungstag der Anmeldung: 15.04.2020
(73) Patentinhaber: MOLEX CVS DABENDORF GMBH, 15806 Zossen (DE)
(72) Erfinder: KAUTGE, Helmut, 14532 Stahnsdorf (DE); LEHMANN, Lars, 15745 Wildau (DE); WEIGELT, Marcus, 15806 Zossen (DE)
(74) Vertreter: Kaufmann, Tobias
(86) Internationale Anmeldenummer: PCT/EP2018/078404
(87) Internationale Veröffentlichungsnummer: WO 2019/086248

(56) Entgegenhaltungen:
- DE-A1-102006 010 963
- DE-A1-102012 113 158

## Beschreibung

### HINTERGRUND DER ERFINDUNG

### Gebiet der Erfindung

Die vorliegende Erfindung betrifft ein Verfahren zur Verstärkung von Funksignalen zwischen einem Endgerät und einer Antenne in einem ersten Frequenzband und in einem zweiten Frequenzband sowie eine Schaltungsanordnung zum Ausführen eines solchen Verfahrens.

### Beschreibung des Stands der Technik

Hinsichtlich Funksignalen, die von einer in einem Kraftfahrzeug befindlichen Funkvorrichtung wie beispielsweise einem Mobiltelefon, einem Smartphone oder einem Notfallsender (nachfolgend Mobilfunkgerät) gesendet und empfangen werden, wirkt die Karosserie eines Kraftfahrzeugs als "*Faraday'scher Käfig*"*,* das heißt sie schirmt die Funksignale ab. Sende- und Empfangssignale des Mobilfunkgeräts werden dadurch abgeschwächt, wobei unter Umständen sogar die Benutzung des Mobilfunkgeräts im Fahrzeug nicht mehr möglich sein kann.

Daher ist es vorteilhaft, das Mobilfunkgerät bei der Benutzung im Fahrzeug über eine Antennenstruktur an eine externe Antenne des Fahrzeugs anzukoppeln und die dabei entstehenden Verluste auszugleichen, um einerseits trotz der abschirmenden Wirkung der Fahrzeugkarosserie einen sicheren Betrieb zu ermöglichen und andererseits die beim Betrieb des Mobilfunkgeräts auftretende Strahlung aus dem Innenraum des Fahrzeugs fernzuhalten. Zu diesem Zweck weist eine entsprechende Verstärkervorrichtung mehrere individuell schaltbare Verstärkerpfade zum Verstärken von Funksignalen in verschiedenen Frequenzbändern auf, die üblicherweise für Uplink- und Downlink-Übertragungen in Mobilfunksystemen verwendet werden.

Solche Vorrichtungen sind beispielsweise in der DE 10 2006 010963 A1 oder der DE 10 2012 113158 A1 offenbart.

Mobile Endgeräte wie zum Beispiel Mobiltelefone oder Smartphones unterstützen in der Regel eine Vielzahl von unterschiedlichen Frequenzbereichen und Kommunikationsstandards, wie beispielsweise Global System for Mobile Communications (GSM), Universal Mobile Telecommunications System (UMTS), Long Term Evolution (LTE) usw., die unterschiedliche Übertragungsverfahren verwenden. Um einen zuverlässigen Betrieb bei der Verwendung unterschiedlicher Kommunikationsstandards und/oder unterschiedlicher Frequenzbereiche bereitstellen zu können, muss eine Schaltungsanordnung zur Verstärkung von Funksignalen zwischen einem Endgerät und einer Antenne diese unterschiedlichen Standards und/oder Frequenzbereiche unterstützen und insbesondere mehrbandfähig sein. Beispielsweise muss eine solche Schaltungsanordnung für die unterschiedlichen Frequenzbereiche spezifisch angepasste Verstärker bereitstellen. Da ein oder mehrere aktivierte Verstärker für einen Frequenzbereich jedoch den Frequenzbereich eines oder mehrerer anderer Verstärker stören können, ist es üblich, nur den vom Endgerät aktuell genutzten Frequenzbereich zu verstärken. Die Verstärker der aktuell nichtverwendeten Frequenzbereiche sind hingegen in der Regel nicht aktiviert, um ein gegenseitiges Stören zu vermeiden und den Leistungsverbrauch der Schaltungsanordnung zu verringern.

Die zunehmende Anzahl von Funkapplikationen und Mobilfunkbändern führt zu einer Verdichtung des Frequenzspektrums, wodurch die Nutzfrequenzbereiche immer weiter zusammenrücken. Beispielsweise werden neue Mobilfunkbänder in vorhandenen Frequenzlücken zwischen bestehenden Mobilfunkbändern allokiert, so dass die neuen Mobilfunkbänder direkt an bestehende Mobilfunkbänder angrenzen.

In dem Grenzbereich zweier benachbarter Mobilfunkbänder wird dabei durch die am Markt erhältlichen frequenzbandspezifischen Bandpassfilter ein spektraler Überschneidungsbereich gebildet. Bei bekannten Detektionsverfahren besteht häufig das Problem, dass das jeweils aktive Mobilfunkband nicht eindeutig anhand einer in dem Überschneidungsbereich gemessenen Leistung eines Funksignals (d.h. eines Signalpegels) bestimmt werden kann. In der Folge lässt sich somit auch nicht eindeutig bestimmen, welche Verstärkerpfade in der Verstärkervorrichtung zu aktivieren bzw. zu schalten sind, um eine optimale Verstärkung des Funksignals zu erreichen.

Es sind somit verbesserte Verfahren zur Verstärkung von Funksignalen zwischen einem Endgerät und einer Antenne sowie entsprechende Schaltungsanordnungen zum Ausführen eines solchen Verfahrens wünschenswert, die die oben beschriebenen Probleme und Nachteile überwinden. Insbesondere sind entsprechende verbesserte Verfahren und Schaltungsanordnungen wünschenswert, die einen optimalen Betrieb auch im Fall von direkt aneinandergrenzenden oder sich überschneidenden Frequenzbändern unterstützen.

### ZUSAMMENFASSUNG DER ERFINDUNG

Die oben beschriebene Aufgabe wird durch die Erfindung gelöst, wie sie in den unabhängigen Ansprüchen definiert ist. Vorteilhafte Ausführungsformen sind in den abhängigen Ansprüchen definiert.

Ausgehend von den oben dargestellten Problemen soll mit der vorliegenden Erfindung ein Verfahren zum Betrieb einer Schaltungsanordnung zur Verstärkung von Funksignalen zwischen einem Endgerät und einer Antenne in einem ersten Frequenzband und in einem zweiten Frequenzband bereitgestellt werden. Das erste Frequenzband sieht dabei eine Signalübertragung nach einem Frequency Division Duplex-, FDD-, Verfahren und das zweite Frequenzband eine Signalübertragung nach einem Time Division Duplex-, TDD-, Verfahren vor. Gemäß dem Verfahren erfolgt in Abwesenheit eines Sendesignals an der Schaltungsordnung sowohl in dem ersten Frequenzband als auch dem zweiten Frequenzband ein Aktivieren einer Verstärkung von Empfangssignalen in dem ersten und dem zweiten Frequenzband. In Reaktion auf ein Detektieren eines Sendesignals an der Schaltungsanordnung erfolgt ein Prüfen des detektierten Sendesignals, ob das detektierte Sendesignal dem ersten Frequenzband oder dem zweiten Frequenzband eindeutig zugeordnet werden kann. Falls das Prüfen ergibt, dass das detektierte Sendesignal dem ersten Frequenzband oder dem zweiten Frequenzband nicht eindeutig zugeordnet werden kann, erfolgen ein Aktivieren eines ersten Sendeverstärkerpfades zum Verstärken des Sendesignals in dem ersten Frequenzband und ein Aktivieren eines ersten Empfangsverstärkerpfades zum Verstärken von Empfangssignalen in dem ersten Frequenzband.

Das oben beschriebene Verfahren ermöglicht es, einen optimalen Betrieb auch im Fall von direkt aneinandergrenzenden oder sich überschneidenden Frequenzbändern zu unterstützen. Es werden erfindungsgemäß sowohl der Voll-Duplex-Betrieb für das FDD-Band als auch der Halb-Duplex-Betrieb für das TDD-Band unterstützt.

In einer vorteilhaften Ausführungsform wird in dem Fall, dass das Prüfen ergibt, dass das detektierte Sendesignal dem ersten Frequenzband oder dem zweiten Frequenzband nicht eindeutig zugeordnet werden kann, ein zweiter Sendeverstärkerpfad zum Verstärken des Sendesignals in dem zweiten Frequenzband deaktiviert. Falls der zweite Sendeverstärkerpfad schon deaktiviert war, bleibt er deaktiviert. Auf diese Weise wird sichergestellt, dass nur die Verstärkerpfade für das erste Frequenzband aktiv sind. Sollte es sich bei dem detektierten Sendesignal um ein TDD-Sendesignal handeln, wird dieses durch das Aktivieren des ersten Sendeverstärkerpfades zur Verstärkung des FDD-Bands ebenfalls unterstützt und verstärkt. Eine gleichzeitige Aktivierung beider Sendeverstärkerpfade und des Empfangsverstärkerpfades des FDD-Bandes hätte einen höheren Schaltungsaufwand zur Folge und würde in Senderichtung im Überschneidungsbereich der eingesetzten Bandpassfilter zu Störungen in Form von destruktiven und konstruktiven Überlagerungen des Sendesignals führen.

In einer weiteren vorteilhaften Ausführungsform stellen das erste und das zweite Frequenzband aneinandergrenzende oder sich überschneidende Frequenzbänder eines Mobilfunknetzes dar. In diesen Fällen ist das vorgeschlagene Verfahren besonders geeignet, einen optimalen Betrieb einer entsprechenden Schaltungsanordnung sicherzustellen.

In einer weiteren vorteilhaften Ausführungsform umfasst das Prüfen, ob das detektierte Sendesignal dem ersten Frequenzband oder dem zweiten Frequenzband eindeutig zugeordnet werden kann, ein Bestimmen, ob ein detektierter Signalpegel in einem der Frequenzbänder über einem vorgegebenen Schwellwert liegt und/oder ob der detektierte Signalpegel in einem der Frequenzbänder um einen vorgegebenen Wert über dem detektierten Signalpegel in dem anderen der Frequenzbänder liegt.

In einer weiteren vorteilhaften Ausführungsform erfolgt, falls das Prüfen ergibt, dass das detektierte Sendesignal dem ersten Frequenzband oder dem zweiten Frequenzband eindeutig zugeordnet werden kann, ein Aktivieren entweder des ersten Sendeverstärkerpfades oder des zweiten Sendeverstärkerpfades entsprechend dem eindeutig zugeordneten ersten oder zweiten Frequenzband, und ein Deaktivieren des jeweils anderen Sendeverstärkerpfades.

In einer weiteren vorteilhaften Ausführungsform erfolgt, wenn basierend auf einer Zeitdauer und/oder einer Periodendauer des Sendesignals das Sendesignal dem ersten Frequenzband oder dem zweiten Frequenzband eindeutig zugeordnet werden kann, ein Aktivieren des entsprechenden Sende- und/oder Empfangsverstärkerpfades.

In einer weiteren vorteilhaften Ausführungsform erfolgt ein Aktivieren der ersten Sende- und Empfangsverstärkerpfade, wenn die Zeitdauer des Sendesignals einen vorgegebenen Zeitdauerschwellwert überschreitet.

In einer weiteren vorteilhaften Ausführungsform enthält jeder der Sendeverstärkerpfade mindestens einen Sendeverstärker und/oder jeder der Empfangsverstärkerpfade mindestens einen Empfangsverstärker.

In einer weiteren vorteilhaften Ausführungsform wird ein Anteil des detektierten Sendesignals ausgekoppelt und an eine Detektoreinheit geleitet.

In einer weiteren vorteilhaften Ausführungsform wird ein von der Detektoreinheit erkanntes Signal einer Steuereinheit zugeleitet.

In einer weiteren vorteilhaften Ausführungsform sieht die Detektoreinheit zumindest für das erste Frequenzband und das zweite Frequenzband einen entsprechenden ersten Detektorpfad und einen entsprechend zweiten Detektorpfad vor, wobei jeder Detektorpfad einen oder mehrere Bandpassfilter umfasst, der/die eingerichtet ist/sind, Signale in dem jeweiligen Frequenzband zu filtern.

In einer weiteren vorteilhaften Ausführungsform wird das Sendesignal von einem Benutzerendgerät gesendet und die Empfangssignale von einer Antenneneinheit empfangen.

In einer weiteren vorteilhaften Ausführungsform werden das Sendesignal und die Empfangssignale vor einer Verstärkung durch einen jeweiligen Verstärkerpfad jeweils mittels einer Frequenzweiche, eines Kopplers oder eines Schalters aufgeteilt.

Um das oben genannte Ziel zu erreichen, stellt die vorliegende Erfindung außerdem eine entsprechende Schaltungsanordnung zur Verstärkung von Funksignalen zwischen einem Endgerät und einer Antenne in einem ersten Frequenzband und in einem zweiten Frequenzband bereit. Die Vorrichtung umfasst Mittel zum Ausführen des oben beschriebenen Verfahrens.

Sowohl die vorstehende allgemeine Beschreibung als auch die detaillierte Beschreibung sind als Beispiel aufzufassen und sollen zur Erläuterung der beanspruchten Erfindung dienen. Weitere Vorteile und Merkmale der Erfindung sind aus der nachstehenden Beschreibung, den Zeichnungen und den Patentansprüchen ersichtlich.

### KURZE BESCHREIBUNG DER ZEICHNUNGEN

Die Merkmale der Erfindung werden in den beiliegenden Ansprüchen näher erläutert. Die Erfindung selbst wird jedoch am besten anhand der nachstehenden detaillierten Beschreibung verständlich, die unter Bezugnahme auf die Zeichnungen eine exemplarische Ausführungsform der Erfindung beschreibt. In den Zeichnungen zeigt:
- Fig. 1: ein Ablaufdiagramm eines Verfahrens zum Betrieb einer Schaltungsanordnung zur Verstärkung von Funksignalen zwischen einem Endgerät und einer Antenne gemäß einer Ausführungsform der Erfindung,
- Fig. 2: eine Schaltungsanordnung zur Verstärkung von Funksignalen zwischen einem Endgerät und einer Antenne gemäß einer Ausführungsform der Erfindung,
- Fig. 3: ein Beispiel einer Übertragungsfunktion für eine Bandüberschneidung zweier Frequenzbänder,
- Fig. 4: ein Beispiel für mehrere aneinandergrenzende oder sich überschneidende Frequenzbänder, und
- Fig. 5: eine Schaltungsanordnung zur Verstärkung von Funksignalen zwischen einem Endgerät und einer Antenne gemäß einer weiteren Ausführungsform der Erfindung.

### DETAILLIERTE BESCHREIBUNG DER ERFINDUNG

Die beigefügten Zeichnungen, der technische Inhalt und die detaillierte Beschreibung beziehen sich auf eine bevorzugte Ausführungsform der Erfindung, was jedoch nicht als Beschränkung des Erfindungsgegenstands aufzufassen ist. Alle gleichwertigen Variationen und Änderungen, die entsprechend den beigefügten Ansprüchen der vorliegenden Erfindung vorgenommen werden, sind durch diese Ansprüche abgedeckt.

Im Folgenden wird die Erfindung anhand der Zeichnungen detailliert beschrieben.

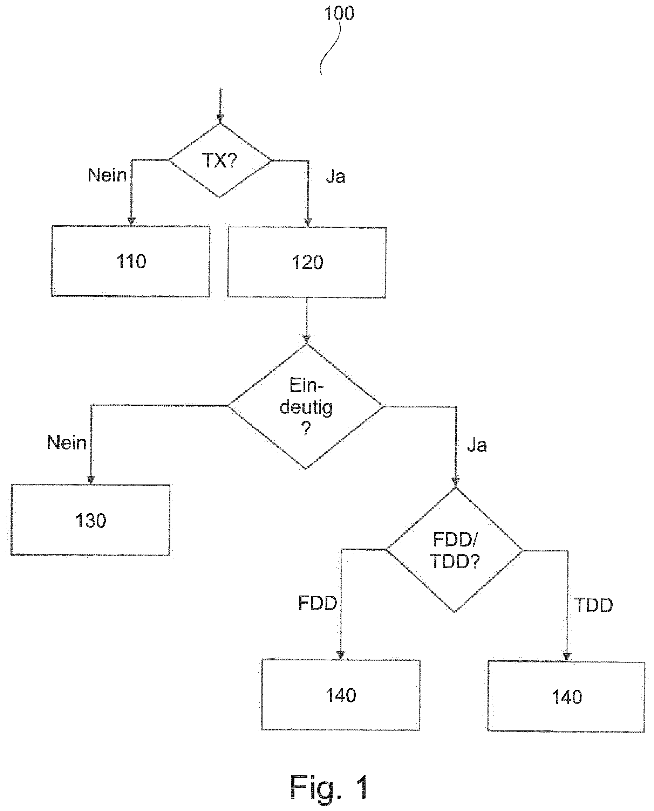

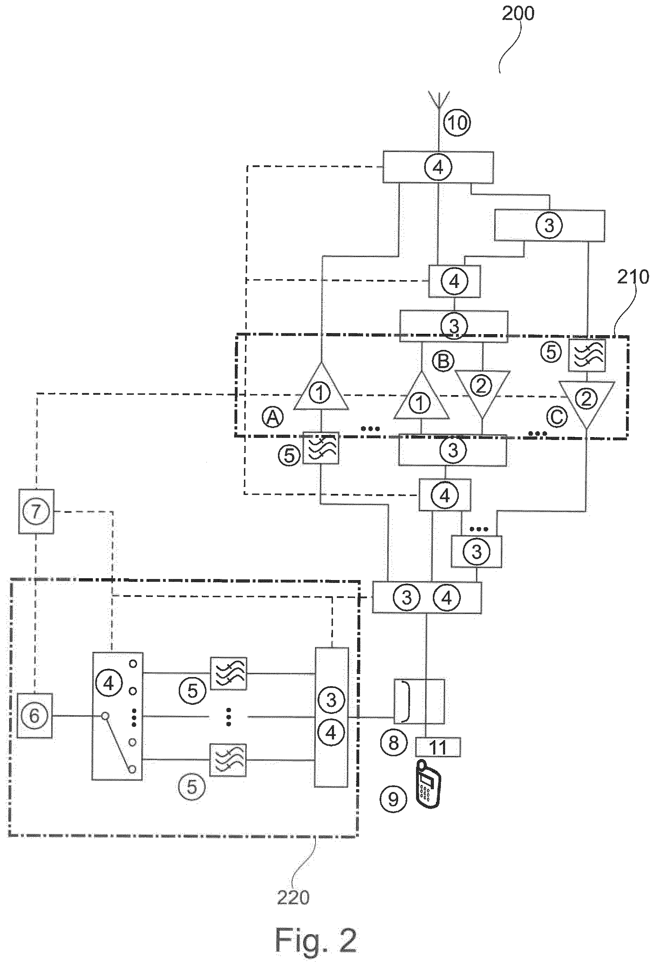

Fig. 1 zeigt ein Ablaufdiagramm eines Verfahrens 100 zum Betrieb einer Schaltungsanordnung 200 zur Verstärkung von Funksignalen zwischen einem Endgerät 9 und einer Antenneneinheit 10 in einem ersten Frequenzband und in einem zweiten Frequenzband gemäß einer Ausführungsform der Erfindung. Die entsprechende Schaltungsanordnung 200 ist in Fig. 2 gezeigt und wird unten im Detail beschrieben.

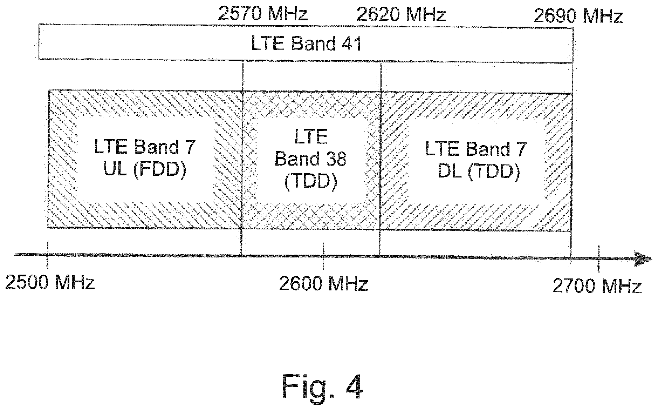

Das erste im Verfahren verwendete Frequenzband sieht eine Signalübertragung nach einem Frequency Division Duplex-, FDD-, Verfahren und das zweite Frequenzband eine Signalübertragung nach einem Time Division Duplex-, TDD-, Verfahren vor. Wie einleitend erwähnt, ist die Anwendung des vorliegenden Verfahrens insbesondere dann vorteilhaft, wenn das erste und das zweite Frequenzband benachbarte und insbesondere aneinandergrenzende oder sich überschneidende Frequenzbänder im Frequenzspektrum darstellen. Ein Beispiel für aneinandergrenzende Frequenzbänder sind die E-UTRA-Bänder 1 und 39, wobei Band 1 für FDD und Band 39 für TDD vorgesehen ist. Ein weiteres Beispiel sind die E-UTRA-Bänder 7 (FDD) und 38 (TDD). Wie in Fig. 4 dargestellt, grenzen diese beiden E-UTRA-Bänder direkt aneinander an.

Obwohl in den genannten Beispielfällen zwei Bänder direkt aneinandergrenzen und insbesondere zumindest theoretisch keinen Überschneidungsbereich aufweisen, besteht dennoch ein bestimmter Überschneidungsbereich, der sich durch die jeweils eingesetzten Bandpassfilter ergibt. Dieser sich technisch ergebende Überschneidungsbereich der beiden benachbarten Frequenzbänder hängt beispielsweise von der Flankensteilheit der eingesetzten Bandpassfilter ab. Für das Beispiel der E-UTRA-Bänder 1 und 39 beträgt dieser Überschneidungsbereich für gängige Bandpassfilter beispielsweise ca. 40 MHz.

Fig. 4 zeigt zudem eine Bandüberschneidung am Beispiel des E-UTRA-Bandes 41, das sich von 2496MHz bis 2690 MHz erstreckt und sich somit mit dem E-UTRA-Band 7 (FDD) überschneidet.

Fig. 1 zeigt zunächst eine Fallunterscheidung dahingehend, ob ein Sendesignal detektiert wird oder nicht ("TX?"). Gemäß dem vorgeschlagenen Verfahren erfolgt in Abwesenheit ("Nein"-Fall der Fallunterscheidung in Fig. 1) eines Sendesignals an der Schaltungsordnung sowohl in dem ersten Frequenzband (FDD) als auch dem zweiten Frequenzband (TDD) ein Aktivieren 110 einer Verstärkung von Empfangssignalen in dem ersten und dem zweiten Frequenzband und somit eine Verstärkung sowohl von TDD- als auch FDD-Empfangssignalen. Diese Verstärkung kann beispielsweise durch die in der in Fig. 2 gezeigten und mit "B" und "C" gekennzeichneten FDD- und TDD-Empfangsverstärkerpfade der Schaltungsanordnung 200 erfolgen, wobei der Pfad "B" für das FDD-Frequenzband über einen Sendeverstärker und einen Empfangsverstärker verfügt und der Sendeverstärkerpfad in diesem Fall deaktiviert ist. Alternativ ist es möglich, dass ein Empfangsverstärkerpfad in der Schaltungsanordnung vorgesehen ist, der sowohl für die Verstärkung von FDD- als auch von TDD-Empfangssignalen eingerichtet ist. Entscheidend ist dabei, dass in Abwesenheit eines Sendesignals die Schaltungsanordnung so konfiguriert wird, dass lediglich Empfangssignale verstärkt werden.

Sobald ein Sendesignal an der Schaltungsanordnung detektiert wird ("Ja"-Fall der Fallunterscheidung in der Fig. 1), erfolgt in Reaktion darauf ein Prüfen 120 des detektierten Sendesignals, ob dieses dem ersten Frequenzband (FDD) oder dem zweiten Frequenzband (TDD) eindeutig zugeordnet werden kann. Dies ist in Fig. 1 als zweite Fallunterscheidung ("Eindeutig?") dargestellt.

Falls das Prüfen 120 ergibt, dass das detektierte Sendesignal dem ersten Frequenzband oder dem zweiten Frequenzband nicht eindeutig zugeordnet werden kann ("Nein"-Fall der entsprechenden Fallunterscheidung in Fig. 1), erfolgen in Schritt 130 ein Aktivieren eines ersten Sendeverstärkerpfades (FDD) zum Verstärken des Sendesignals in dem ersten FDD-Frequenzband und ein Aktivieren des ersten Empfangsverstärkerpfades (FDD) zum Verstärken von Empfangssignalen in dem ersten FDD-Frequenzband. Es wird also der gesamte FDD-Duplexpfad "B" zur Unterstützung des FDD-Bandes (erstes Frequenzband) aktiviert. Vorzugsweise wird gleichzeitig der zweite Sendeverstärkerpfad, d.h. der TDD-Sendeverstärkerpfad, deaktiviert, um sicherzustellen, dass nur die Verstärkerpfade für das FDD-Frequenzband aktiv sind. Auf diese Weise wird ein Stören beispielsweise durch Interferenzen zwischen TDD- und FDD- Sendeverstärkerpfaden vermieden. Sollte es sich bei dem aktuell detektierten Sendesignal um ein TDD-Sendesignal handeln, wird dieses durch das Aktivieren des ersten Sendeverstärkerpfades zur Verstärkung des FDD-Bands ebenfalls unterstützt und verstärkt.

Aktivieren eines Verstärkerpfades bedeutet dabei, dass der Verstärkerpfad so geschaltet wird, dass er die Signale des entsprechenden Bandes verstärken kann. Die jeweiligen Sendeverstärker 1 bzw. Empfangsverstärker 2 müssen entsprechend stromführend geschaltet sein. Dies bedeutet jedoch nicht, dass die jeweiligen Verstärker in anderen Zuständen als "aktiviert" stromlos geschaltet sein müssen.

Erfindungsgemäß umfasst das Prüfen 120, ob das detektierte Sendesignal dem ersten FDD-Frequenzband oder dem zweiten TDD-Frequenzband eindeutig zugeordnet werden kann, ob es sich also eindeutig um ein FDD- oder um ein TDD-Signal handelt, ein Bestimmen, ob ein detektierter Signalpegel in einem der Frequenzbänder über einem vorgegebenen Schwellwert liegt und/oder ob der detektierte Signalpegel in einem der Frequenzbänder um einen vorgegebenen Wert über dem detektierten Signalpegel in dem anderen der Frequenzbänder liegt.

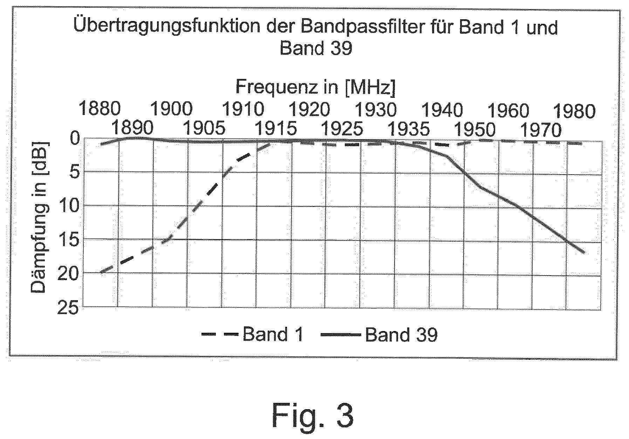

In Fig. 3 ist eine beispielhafte Darstellung der Übertragungsfunktion der Bandpassfilter im Überschneidungsbereich für die oben genannten E-UTRA-Bänder 1 und 39 gezeigt. Auf der horizontalen Achse ist der Frequenzbereich von 1880 bis 1980 MHz aufgetragen. E-UTRA-Band 39 (TDD) beginnt bei 1880 MHz und endet bei 1920 MHz. E-UTRA-Band 1 (FDD) beginnt bei 1920 MHz und endet bei 1980 MHz. Auf der vertikalen Achse des in Fig. 3 dargestellten Diagramms ist das Übertragungsverhalten aufgetragen, welches am Leistungsdetektor als Leistungsunterschied messbar ist. Als Unterscheidungskriterium dafür, ob ein in diesen Bändern detektiertes Signal ein FDD- oder ein TDD-Signal ist, wird ein messbarer Leistungsunterschied des detektierten Signals in den aneinandergrenzenden Bändern angenommen. Die spektrale Bandbreite, in dem diese Leistung messbar ist, hängt insbesondere von der Flankensteilheit der eingesetzten Bandpassfilter ab. Bei einem Leistungsunterschied von beispielsweise 6dB ergibt sich der oben erwähnte und aus Fig. 3 ersichtliche Überschneidungsbereich zwischen den beiden Bändern von ca. 40 MHz, in dem eine eindeutige Zuordnung eines Signals zu einem der beiden Bänder nicht allein anhand des gemessenen Signalpegels möglich ist. Dieser Leistungsunterschied von 6dB entspricht dem oben erwähnten vorgegebenen Schwellwert bezüglich des detektierten Signalpegels in einem der beiden Frequenzbänder. Der Wert von 6dB ist beispielhaft und hängt insbesondere von einer erwarteten Signalform, verwendeten Detektoren sowie einer Messauflösung der Steuereinheit 7 ab.

In dem anderen Fall, dass das Prüfen 120 ergibt, dass das detektierte Sendesignal dem ersten Frequenzband oder dem zweiten Frequenzband eindeutig zugeordnet werden kann ("Ja"-Fall der entsprechenden Fallunterscheidung in Fig. 1), erfolgt eine weitere Fallunterscheidung ("FDD/TDD" in Fig. 1) dahingehend, ob es sich um ein FDD- oder ein TDD-Signal handelt. Folglich wird in Schritt 140 der erste Sendeverstärkerpfad (FDD) aktiviert, falls das detektierte Sendesignal dem ersten Frequenzband (FDD) zugeordnet werden kann. Falls das detektierte Sendesignal dem zweiten Frequenzband (TDD) zugeordnet werden kann, wird in Schritt 140 der zweite Sendeverstärkerpfad (TDD) aktiviert. Gleichzeitig erfolgt ein Deaktivieren des jeweils anderen Sendeverstärkerpfades, um ein gegenseitiges Stören der Sendeverstärker zu vermeiden und gleichzeitig den Energiebedarf der Schaltungsanordnung zu verringern.

Neben dem oben ausgeführten Signalpegel-basierten Bestimmen des jeweilig verwendeten Frequenzbandes wird in einigen Ausführungsformen eine Zeitdauer und/oder eine Periodendauer gemessen, während derer das detektierte Sendesignal anliegt. Der Begriff "Zeitdauer" bezieht sich auf eine Dauer, während derer ein Uplinksignal oder Sendesignal vom Endgerät ohne Unterbrechung gesendet wird. Der Begriff "Periodendauer" bezieht sich auf eine Dauer, während derer sich ein Uplinksignal periodisch wiederholt. Im LTE-TDD-Standard wird dies auch als "Downlink-to-Uplink Switch-point periodicity" bezeichnet. Es wird also neben dem oben ausgeführten Signalpegel-basierten Bestimmen des jeweilig verwendeten Frequenzbandes in einigen Ausführungsformen das Zeitverhalten des Sendesignals anhand der Sendedauer und/oder der periodischen Wiederholung von Sendesignalen analysiert.

Basierend auf der Zeitdauer und/oder der Periodendauer des Sendesignals wird geprüft, ob das Sendesignal dem ersten Frequenzband oder dem zweiten Frequenzband eindeutig zugeordnet werden kann. Ist dies der Fall, erfolgt ein Aktivieren des entsprechenden Sende- und/oder Empfangsverstärkerpfades.

Beispielsweise erfolgt, wenn die Zeitdauer des Sendesignals einen vorgegebenen Zeitdauerschwellwert überschreitet, ein Aktivieren der ersten Sende- und Empfangsverstärkerpfade, das heißt der FDD-Verstärkerpfade, da es sich in einem solchen Fall nicht um ein TDD-Signal handeln kann. Der Zeitdauerschwellwert ergibt sich dabei aus den in dem jeweiligen Telekommunikationsstandard festgelegten Zeitdauern für entsprechende Sendesignale. Beispielsweise hat ein TDD-Zeitrahmen Standard-gemäß eine Periodendauer von 5ms oder 10ms (LTE-TDD) beziehungsweise 5ms (TD-SCDMA). Je nach Konfiguration der Zeitschlitze für Senden und Empfangen ergibt sich somit eine maximale Zeit zum Senden im Uplink von ca. T_{TD-SCDMA} ≈ 4,2ms und T_{LTE-TDD} ≈ 3,2ms. Zur Detektion eines FDD-Bandes muss ein aktives Signal vorzugsweise länger anliegen als die maximal zulässige Dauer eines Uplinksignals für das TDD-Band. Im Fall der Standards LTE-TDD und TD-SCDMA ist es also notwendig, dass ein Signal länger als 4,2ms detektiert wird, um es eindeutig als FDD-Signal zu erkennen. Dieser Wert entspricht dem oben erwähnten Zeitdauerschwellwert.

Zur Bestimmung des jeweiligen Frequenzbandes wird ein Anteil des detektierten Sendesignals ausgekoppelt und an eine Detektoreinheit 220 geleitet. Ein von der Detektoreinheit 220 erkanntes Signal wird zur weiteren Verarbeitung einer Steuereinheit 7 zugeleitet, die zum Steuern (d.h. Aktivieren und Deaktivieren) der Sende- und Empfangsverstärkerpfade 1, 2 eingerichtet ist.

Fig. 2 zeigt eine Schaltungsanordnung 200 zur Verstärkung von Funksignalen zwischen einem Endgerät 9 und einer Antenneneinheit 10 in einem ersten Frequenzband und in einem zweiten Frequenzband gemäß einer Ausführungsform der Erfindung, umfassend Mittel zum Ausführen des oben beschriebenen Verfahrens.

Die Schaltungsanordnung 200 nimmt vorzugsweise mit Hilfe einer Übertragungseinheit 11 die Sendesignale des Endgeräts 9 zur leitungsbasierten Weiterverarbeitung mit Hilfe der Schaltungsanordnung 200 auf und überträgt die Empfangssignale der Antenneneinheit 10 nach der Weiterverarbeitung durch die Schaltungsanordnung 200 an das Endgerät 9. Die Übertragungseinheit 11 ist jedoch nicht notwendigerweise Teil der Schaltungsanordnung. In Sendesignalrichtung schließt sich an die Übertragungseinheit 11 der Koppler 8 an, der dazu dient, das Sendesignal des Endgeräts 9 in (zumindest) einen ersten Signalteil und einen zweiten Signalteil aufzuteilen und den ersten Signalteil dem Sendesignalleistungsdetektor 6 und den zweiten Signalteil der Verstärkungseinheit 210 zuzuführen.

Fig. 2 stellt weiterhin Sende- und/oder Empfangsverstärkerpfade A, B, C dar. Jeder Verstärkerpfad ist dabei für die Verstärkung eines der Frequenzbänder eingerichtet. Verstärkerpfad B stellt beispielsweise den oben ausgeführten FDD-Duplexpfad zur Unterstützung des FDD-Bandes dar und umfasst jeweils einen Sende- und Empfangsverstärkerpfad. Der Verstärkerpfad A stellt einen Sendeverstärkerpfad für das TDD-Band dar, und der Verstärkerpfad C stellt schließlich einen entsprechenden Empfangsverstärkerpfad für das TDD-Band dar. Jeder der Sendeverstärkerpfade A, B umfasst einen Sendeverstärker 1, und jeder der Empfangsverstärkerpfade B, C umfasst einen Empfangsverstärker 2.

Empfangs- und Sendesignale des Endgeräts 9 und der Antenneneinheit 10 werden über Frequenzweiche(n) 3, Koppler (in Fig. 2 nicht gezeigt) und/oder Hochfrequenzschalter 4 voneinander getrennt. Das Sendesignal des Endgeräts 9 wird von einem Koppler 8 zu einer Detektoreinheit 220 geführt, die eine oder mehrere Frequenzweichen 3, Hochfrequenzschalter 4, Koppler (in Fig. 2 nicht gezeigt), mehrere Bandpassfilter 5 und einen Detektor 6 umfasst. Die Detektoreinheit 220 umfasst für das erste Frequenzband und das zweite Frequenzband zumindest einen entsprechenden ersten und zweiten Detektorpfad, wobei jeder Detektorpfad einen oder mehrere Bandpassfilter 5 umfasst, die eingerichtet sind, Signale in dem jeweiligen Frequenzband zu filtern. Die mit dem Detektor 6 gekoppelte Steuereinheit 7 ist zum Auswerten der ihr von dem Detektor 6 zugeleiteten Signale und einem entsprechenden Steuern (d.h. Aktivieren und Deaktivieren) der Sende- und Empfangsverstärker 1, 2 nach dem oben beschriebenen Verfahren eingerichtet. Das Steuern basiert somit auf den ihr von dem Detektor 6 zugeleiteten Signalen.

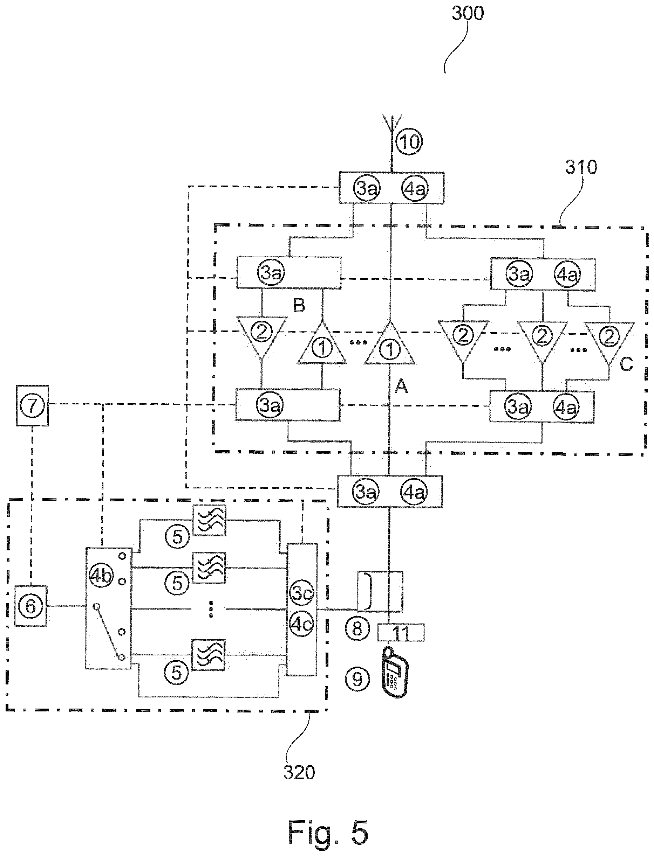

Fig. 5 zeigt eine entsprechende Schaltungsanordnung 300, die eine Verstärkungseinheit 310 aufweist, welche im Vergleich zu der Verstärkungseinheit 210 der in Fig. 2 gezeigten Schaltungsanordnung 200 mehrere Empfangsverstärkerpfade C mit jeweils einem Empfangsverstärker 2 aufweist. Ebenso weist die Detektoreinheit 320 der Schaltungsanordnung 300 entsprechend mehrere Bandpassfilter 5 und somit mehrere Detektorpfade auf. Die weiteren Komponenten wie Frequenzweichen 3, Hochfrequenzschalter 4 und/oder Koppler zur Aufteilung der Sende- und Empfangssignale vor einer Verstärkung durch die jeweiligen Verstärkerpfade sind in der in Fig. 5 gezeigten Schaltungsanordnung 300 entsprechend angepasst. Die Fig. 5 verdeutlicht, dass die erfindungsgemäße Schaltungsanordnung sowie das entsprechende Verfahren hinsichtlich der Anzahl der Frequenzbänder sowie entsprechender Verstärkerpfade beliebig skalierbar sind. Insbesondere können auch mehr als zwei Frequenzbänder verarbeitet werden, und es können beliebig viele Verstärkerpfade mit einer entsprechenden Anzahl von Verstärkern verwendet werden.

### Bezugszeichenliste

- 1: Sendeverstärker
- 2: Empfangsverstärker
- 3: Frequenzweiche, Koppler, Splitter (Leistungsteiler)
- 4: Hochfrequenzschalter
- 5: Hochfrequenzfilter
- 6: Sendesignalleistungsdetektor
- 7: Steuereinheit
- 8: Koppler
- 9: Endgerät
- 10: Antenne
- 11: Übertragungseinheit
- 100: Verfahren
- 110-140: Verfahrensschritte
- 200,300: Schaltungsanordnung
- 210,310: Verstärkungseinheit
- 220,320: Detektoreinheit

## Patentansprüche

1. Verfahren (100) zum Betrieb einer Schaltungsanordnung (200, 300) zur Verstärkung von Funksignalen zwischen einem Endgerät (9) und einer Antenne (10) in einem ersten Frequenzband und in einem zweiten Frequenzband, wobei das erste Frequenzband eine Signalübertragung nach einem Frequency Division Duplex-, FDD-, Verfahren und das zweite Frequenzband eine Signalübertragung nach einem Time Division Duplex-, TDD-, Verfahren vorsieht, umfassend:
- in Abwesenheit eines Sendesignals an der Schaltungsordnung sowohl in dem ersten Frequenzband als auch dem zweiten Frequenzband, Aktivieren (110) einer Verstärkung von Empfangssignalen in dem ersten und dem zweiten Frequenzband;
**dadurch gekennzeichnet, dass** das Verfahren weiterhin umfasst:
- in Reaktion auf ein Detektieren eines Sendesignals an der Schaltungsanordnung:
- Prüfen (120) des detektierten Sendesignals, ob das detektierte Sendesignal dem ersten Frequenzband oder dem zweiten Frequenzband eindeutig zugeordnet werden kann;
- falls das Prüfen ergibt, dass das detektierte Sendesignal dem ersten Frequenzband oder dem zweiten Frequenzband nicht eindeutig zugeordnet werden kann, Aktivieren (130) eines ersten Sendeverstärkerpfades zum Verstärken des Sendesignals in dem ersten Frequenzband und Aktivieren (130) eines ersten Empfangsverstärkerpfades zum Verstärken von Empfangssignalen in dem ersten Frequenzband.

2. Verfahren nach Anspruch 1, wobei in dem Fall, dass das Prüfen (120) ergibt, dass das detektierte Sendesignal dem ersten Frequenzband oder dem zweiten Frequenzband nicht eindeutig zugeordnet werden kann, ein zweiter Sendeverstärkerpfad zum Verstärken des Sendesignals in dem zweiten Frequenzband deaktiviert wird.

3. Verfahren nach einem der vorstehenden Ansprüche, wobei das erste und das zweite Frequenzband aneinandergrenzende oder sich überschneidende Frequenzbänder eines Mobilfunknetzes darstellen.

4. Verfahren nach einem der vorstehenden Ansprüche, wobei das Prüfen (120), ob das detektierte Sendesignal dem ersten Frequenzband oder dem zweiten Frequenzband eindeutig zugeordnet werden kann, ein Bestimmen umfasst, ob ein detektierter Signalpegel in einem der Frequenzbänder über einem vorgegebenen Schwellwert liegt und/oder ob der detektierte Signalpegel in einem der Frequenzbänder um einen vorgegebenen Wert über dem detektierten Signalpegel in dem anderen der Frequenzbänder liegt.

5. Verfahren nach einem der vorstehenden Ansprüche, ferner umfassend:
falls das Prüfen (120) ergibt, dass das detektierte Sendesignal dem ersten Frequenzband oder dem zweiten Frequenzband eindeutig zugeordnet werden kann:
- Aktivieren (140) entweder des ersten Sendeverstärkerpfades oder des zweiten Sendeverstärkerpfades entsprechend der eindeutigen Zuordnung des detektierten Sendesignals zum ersten oder zweiten Frequenzband, und
- Deaktivieren des jeweils anderen Sendeverstärkerpfades.

6. Verfahren nach einem der vorstehenden Ansprüche, wobei, wenn basierend auf einer Zeitdauer und/oder einer Periodendauer des Sendesignals das Sendesignal dem ersten Frequenzband oder dem zweiten Frequenzband eindeutig zugeordnet werden kann, ein Aktivieren des entsprechenden Sende- und/oder Empfangsverstärkerpfades erfolgt.

7. Verfahren nach Anspruch 6, wobei, wenn die Zeitdauer des Sendesignals einen vorgegebenen Zeitdauerschwellwert überschreitet, ein Aktivieren der ersten Sende- und Empfangsverstärkerpfade erfolgt.

8. Verfahren nach einem der vorstehenden Ansprüche, wobei jeder der Sendeverstärkerpfade mindestens einen Sendeverstärker enthält, und/oder wobei jeder der Empfangsverstärkerpfade mindestens einen Empfangsverstärker enthält.

9. Verfahren nach einem der vorstehenden Ansprüche, wobei ein Anteil des detektierten Sendesignals ausgekoppelt und an eine Detektoreinheit (220) geleitet wird.

10. Verfahren nach Anspruch 9, wobei ein von der Detektoreinheit (220) erkanntes Signal einer Steuereinheit zugeleitet wird.

11. Verfahren nach einem der Ansprüche 9 bis 10, wobei die Detektoreinheit (220) zumindest für das erste Frequenzband und das zweite Frequenzband einen entsprechenden ersten Detektorpfad und einen entsprechenden zweiten Detektorpfad vorsieht, wobei jeder Detektorpfad einen oder mehrere Bandpassfilter umfasst, der/die eingerichtet ist/sind, Signale in dem jeweiligen Frequenzband zu filtern.

12. Verfahren nach einem der vorstehenden Ansprüche, wobei das Sendesignal von einem Benutzerendgerät (9) gesendet wird und wobei die Empfangssignale von einer Antenneneinheit (10) empfangen werden.

13. Verfahren nach einem der vorstehenden Ansprüche, wobei das Sendesignal und die Empfangssignale vor einer Verstärkung durch einen jeweiligen Verstärkerpfad jeweils mittels einer Frequenzweiche (3), eines Kopplers oder eines Schalters (4) aufgeteilt werden.

14. Schaltungsanordnung (200, 300) zur Verstärkung von Funksignalen zwischen einem Endgerät (9) und einer Antenne (10) in einem ersten Frequenzband und in einem zweiten Frequenzband, wobei das erste Frequenzband zur Signalübertragung nach einem Frequency Division Duplex-, FDD-, Verfahren und das zweite Frequenzband zur Signalübertragung nach einem Time Division Duplex-, TDD-, Verfahren vorgesehen ist, die Schaltungsanordnung umfassend
- Mittel zum Detektieren (220, 320) eines Sendesignals an der Schaltungsanordnung;
- Mittel zum Aktivieren (110) einer Verstärkung von Empfangssignalen in dem ersten und dem zweiten Frequenzband, in Abwesenheit eines Sendesignals an der Schaltungsordnung sowohl in dem ersten Frequenzband als auch dem zweiten Frequenzband;
**dadurch gekennzeichnet, dass** die Schaltungsanordnung weiterhin umfasst:
- Mittel zum Prüfen (7) des detektierten Sendesignals, in Reaktion auf das Detektieren des Sendesignals an der Schaltungsanordnung, ob das detektierte Sendesignal dem ersten Frequenzband oder dem zweiten Frequenzband eindeutig zugeordnet werden kann;
- Mittel zum Aktivieren (7) eines ersten Sendeverstärkerpfades zum Verstärken des Sendesignals in dem ersten Frequenzband und eines ersten Empfangsverstärkerpfades zum Verstärken von Empfangssignalen in dem ersten Frequenzband, falls das Prüfen ergibt, dass das detektierte Sendesignal dem ersten Frequenzband oder dem zweiten Frequenzband nicht eindeutig zugeordnet werden kann.

## Claims

1. Method (100) for operating a circuit arrangement (200, 300) for amplifying radio signals between a terminal device (9) and an antenna (10) in a first frequency band and in a second frequency band, wherein the first frequency band provides a signal transmission according to a frequency-division duplexing (FDD) method and the second frequency band provides a signal transmission according to a time-division duplexing (TDD) method, comprising:
- in the absence of a transmit signal at the circuit arrangement both in the first frequency band and the second frequency band, activating (110) an amplification of receive signals in the first and the second frequency band;
**characterised in that** the method further comprises:
- in response to a detection of a transmit signal at the circuit arrangement:
- checking (120) the detected transmit signal as to whether the detected transmit signal can be uniquely associated with the first frequency band or the second frequency band;
- if the checking shows that the detected transmit signal cannot be uniquely associated with the first frequency band or the second frequency band, activating (130) a first transmit amplifier path for amplifying the transmit signal in the first frequency band and activating (130) a first receive amplifier path for amplifying receive signals in the first frequency band.

2. Method according to claim 1, wherein, in the event that the checking (120) shows that the detected transmit signal cannot be uniquely associated with the first frequency band or the second frequency band, a second transmit amplifier path for amplifying the transmit signal in the second frequency band is deactivated.

3. Method according to any of the preceding claims, wherein the first and the second frequency band constitute adjacent or overlapping frequency bands of a mobile radio network.

4. Method according to any of the preceding claims, wherein the checking (120) as to whether the detected transmit signal can be uniquely associated with the first frequency band or the second frequency band comprises determining whether a detected signal level in one of the frequency bands is above a predetermined threshold value and/or whether the detected signal level in one of the frequency bands is a predetermined value above the detected signal level in the other of the frequency bands.

5. Method according to any of the preceding claims, further comprising:
if the checking (120) shows that the detected transmit signal can be uniquely associated with the first frequency band or the second frequency band:
- activating (140) either the first transmit amplifier path or the second transmit amplifier path according to the unique association of the detected transmit signal with the first or second frequency band, and
- deactivating the other transmit amplifier path in each case.

6. Method according to any of the preceding claims, wherein, if the transmit signal can be uniquely associated with the first frequency band or the second frequency band based on a time duration and/or a period duration of the transmit signal, activation of the corresponding transmit and/or receive amplifier path takes place.

7. Method according to claim 6, wherein, if the time duration of the transmit signal exceeds a predetermined time duration threshold, activation of the first transmit and receive amplifier paths takes place.

8. Method according to any of the preceding claims, wherein each of the transmit amplifier paths contains at least one transmit amplifier, and/or wherein each of the receive amplifier paths contains at least one receive amplifier.

9. Method according to any of the preceding claims, wherein a portion of the detected transmit signal is decoupled and directed to a detector unit (220).

10. Method according to claim 9, wherein a signal detected by the detector unit (220) is fed to a control unit.

11. Method according to any of claims 9 to 10, wherein the detector unit (220) provides, at least for the first frequency band and the second frequency band, a corresponding first detector path and a corresponding second detector path, wherein each detector path comprises one or more bandpass filters configured to filter signals in the respective frequency band.

12. Method according to any of the preceding claims, wherein the transmit signal is transmitted by a user terminal device (9) and wherein the receive signals are received by an antenna unit (10).

13. Method according to any of the preceding claims, wherein the transmit signal and the receive signals are respectively split by means of a crossover (3), a coupler or a switch (4) before amplification by a respective amplifier path.

14. Circuit arrangement (200, 300) for amplifying radio signals between a terminal device (9) and an antenna (10) in a first frequency band and in a second frequency band, wherein the first frequency band is provided for signal transmission according to a frequency-division duplexing (FDD) method and the second frequency band is provided for signal transmission according to a time-division duplexing (TDD) method, the circuit arrangement comprising:
- means for detecting (220, 320) a transmit signal at the circuit arrangement;
- means for activating (110) an amplification of receive signals in the first and the second frequency band in the absence of a transmit signal at the circuit arrangement both in the first frequency band and the second frequency band;
**characterised in that** the circuit arrangement further comprises:
- means for checking (7) the detected transmit signal, in response to the detection of the transmit signal at the circuit arrangement, as to whether the detected transmit signal can be uniquely associated with the first frequency band or the second frequency band;
- means for activating (7) a first transmit amplifier path for amplifying the transmit signal in the first frequency band and a first receive amplifier path for amplifying receive signals in the first frequency band if the checking shows that the detected transmit signal cannot be uniquely associated with the first frequency band or the second frequency band.

## Revendications

1. Procédé (100) de fonctionnement d'un agencement de circuit (200, 300) permettant l'amplification de signaux radioélectriques entre un terminal (9) et une antenne (10) dans une première bande de fréquences et dans une seconde bande de fréquences, dans lequel la première bande de fréquences est prévue pour une transmission de signaux selon un procédé duplex à répartition en fréquence (DRF), et la seconde bande de fréquences est prévue pour une transmission de signaux selon un procédé duplex à répartition dans le temps (DRT), comprenant l'étape consistant à :
- en l'absence d'un signal d'émission au niveau de l'agencement de circuit aussi bien dans la première bande de fréquences que dans la seconde bande de fréquences, activer (110) l'amplification de signaux de réception dans les première et seconde bandes de fréquences ;
**caractérisé en ce que** le procédé comprend en outre les étapes consistant à :
- en réaction à la détection d'un signal d'émission au niveau de l'agencement de circuit :
- vérifier (120) si le signal d'émission détecté peut être associé de manière univoque à la première bande de fréquences ou à la seconde bande de fréquences ;
- si la vérification établit que le signal d'émission détecté ne peut être associé de manière univoque à la première bande de fréquences ou à la seconde bande de fréquences, activer (130) un premier chemin d'amplificateur d'émission permettant d'amplifier le signal d'émission dans la première bande de fréquences et activer (130) un premier chemin d'amplificateur de réception permettant d'amplifier des signaux de réception dans la première bande de fréquences.

2. Procédé selon la revendication 1, dans lequel, au cas où la vérification (120) établit que le signal d'émission détecté ne peut être associé de manière univoque à la première bande de fréquences ou à la seconde bande de fréquences, un second chemin d'amplificateur d'émission permettant d'amplifier le signal d'émission dans la seconde bande de fréquences est désactivé.

3. Procédé selon l'une quelconque des revendications précédentes, dans lequel les première et seconde bandes de fréquences représentent des bandes de fréquences contiguës ou se chevauchant d'un réseau cellulaire.

4. Procédé selon l'une quelconque des revendications précédentes, dans lequel la vérification (120) du fait que le signal d'émission détecté peut être associé de manière univoque à la première bande de fréquences ou à la seconde bande de fréquences comprend la détermination du fait qu'un niveau de signal détecté dans l'une des bandes de fréquences est supérieur à une valeur de seuil prédéfinie et/ou du fait que le niveau de signal détecté dans l'une des bandes de fréquences se situe à une valeur prédéfinie au-dessus du niveau de signal détecté dans l'autre des bandes de fréquences.

5. Procédé selon l'une quelconque des revendications précédentes, comprenant en outre les étapes consistant à :
si la vérification (120) établit que le signal d'émission détecté peut être associé de manière univoque à la première bande de fréquences ou à la seconde bande de fréquences :
- activer (140) le premier chemin d'amplificateur d'émission ou bien le second chemin d'amplificateur d'émission conformément à l'association univoque du signal d'émission détecté à la première bande de fréquences ou à la seconde bande de fréquences, et
- désactiver l'autre chemin d'amplificateur d'émission.

6. Procédé selon l'une quelconque des revendications précédentes, dans lequel une activation du chemin d'amplificateur d'émission et/ou de réception correspondant intervient lorsque le signal d'émission peut être associé de manière univoque à la première bande de fréquences ou à la seconde bande de fréquences en se basant sur une durée et/ou une période du signal d'émission.

7. Procédé selon la revendication 6, dans lequel une activation des premiers chemins d'amplificateur d'émission et de réception intervient si la durée du signal d'émission dépasse une valeur de seuil de durée prédéfinie.

8. Procédé selon l'une quelconque des revendications précédentes, dans lequel chacun des chemins d'amplificateur d'émission contient au moins un amplificateur d'émission, et/ou
dans lequel chacun des chemins d'amplificateur de réception comprend au moins un amplificateur de réception.

9. Procédé selon l'une quelconque des revendications précédentes, dans lequel une partie du signal d'émission détecté est découplée et transmise à une unité de détection (220).

10. Procédé selon la revendication 9, dans lequel un signal reconnu par l'unité de détection (220) est transmis à une unité de commande.

11. Procédé selon l'une quelconque des revendications 9 à 10, dans lequel l'unité de détection (220) fournit un premier chemin de détecteur correspondant et un second chemin de détecteur correspondant au moins pour la première bande de fréquences et la seconde bande de fréquences, dans lequel chaque chemin de détecteur comprend un ou plusieurs filtre(s) passe-bande conçu(s) pour filtrer des signaux dans la bande de fréquences respective.

12. Procédé selon l'une quelconque des revendications précédentes, dans lequel le signal d'émission est émis par un terminal d'utilisateur (9) et dans lequel les signaux de réception sont reçus par une unité d'antenne (10).

13. Procédé selon l'une quelconque des revendications précédentes, dans lequel le signal d'émission et les signaux de réception sont divisés respectivement au moyen d'un filtre de fréquence (3), d'un coupleur ou d'un commutateur (4) avant une amplification grâce à un chemin d'amplificateur respectif.

14. Agencement de circuit (200, 300) permettant l'amplification de signaux radioélectriques entre un terminal (9) et une antenne (10) dans une première bande de fréquences et dans une seconde bande de fréquences, dans lequel la première bande de fréquences est prévue pour une transmission de signaux selon un procédé duplex à répartition en fréquence (DRF), et la seconde bande de fréquences est prévue pour une transmission de signaux selon un procédé duplex à répartition dans le temps (DRT), l'agencement de circuit comprenant
- des moyens permettant de détecter (220, 320) un signal d'émission au niveau de l'agencement de circuit ;
- des moyens permettant d'activer (110) une amplification de signaux de réception dans les première et seconde bandes de fréquences, en l'absence d'un signal d'émission au niveau de l'agencement de circuit aussi bien dans la première bande de fréquences que dans la seconde bande de fréquences ;
**caractérisé en ce que** l'agencement de circuit comprend en outre :
- des moyens permettant de vérifier (7), en réaction à la détection du signal d'émission au niveau de l'agencement de circuit, si le signal d'émission détecté peut être associé de manière univoque à la première bande de fréquences ou à la seconde bande de fréquences ;
- des moyens permettant d'activer (7) un premier chemin d'amplificateur d'émission afin d'amplifier le signal d'émission dans la première bande de fréquences et un premier chemin d'amplificateur de réception afin d'amplifier les signaux de réception dans la première bande de fréquences dans le cas où la vérification établit que le signal d'émission détecté ne peut être associé de manière univoque à la première bande de fréquences ou à la seconde bande de fréquences.
